# FASCICULE DE BREVET EUROPEEN

(11) **EP 2 807 456 B1**
(45) Date de publication et mention de la délivrance du brevet: **24.10.2018**
(21) Numéro de dépôt: 13704183.6
(22) Date de dépôt: 21.01.2013
(51) Int. Cl.: G01D 7/00, H01H 9/16

(54) **MODULE INDICATEUR DE POSITION A AXE ILLUMINE**
POSITIONSANZEIGEMODUL MIT BELEUCHTETER ACHSE
POSITION-INDICATING MODULE WITH ILLUMINATED AXIS

(30) Priorité: 23.01.2012 FR 1250608
(43) Date de publication de la demande: 03.12.2014
(73) Titulaire: Moving Magnet Technologies, 25000 Besançon (FR)
(72) Inventeur: BIWERSI, Stéphane, F-25140 Frambouhans (FR); DELBAERE, Michael, F-25720 Avanne (FR)
(74) Mandataire: IP Trust
(86) Numéro de dépôt international: PCT/FR2013/050125
(87) Numéro de publication internationale: WO 2013/110886

(56) Documents cités:
- DE-A1- 2 337 409
- DE-U1- 20 218 508
- DE-U1-202006 012 204
- JP-A- 2007 048 482
- JP-A- 2009 187 709
- US-A1- 2004 227 613
- US-A1- 2007 227 870

## Description

### DOMAINE TECHNIQUE DE L'INVENTION

La présente invention se rapporte au domaine des indicateurs de position sans contact, et plus particulièrement à axe traversant.

Elle concerne plus particulièrement un module indicateur de position comprenant un capteur de position constitué :
- d'un élément mobile, apte à être entrainé directement par un opérateur ou par un élément d'entrainement mécanique ou électromécanique, et
- d'un ensemble de détection délivrant une information électrique dépendant de la position de l'ensemble mobile.
L'ensemble de détection est sans contact électrique ni mécanique avec l'ensemble mobile.
Pour réaliser l'éclairage, au moins un élément d'illumination comportant au moins une source lumineuse est prévu.

### ETAT DE LA TECHNIQUE ANTERIEURE

On connait dans l'état de la technique des technologies de capteur sans contact à axe traversant développées pour des courses inférieures ou égales à 360° telles que notamment décrites dans les demandes de brevet EP1949036 et EP1989505 de la demanderesse.

De telles solutions s'appliquent notamment à des capteurs angulaires miniatures de courses voisines de 360° destinés à être montés directement sur des circuits imprimés. Ils permettent ainsi de remplacer avantageusement en termes de durée de vie et de performances des solutions potentiométriques (à contact) tout en permettant au capteur, du fait de la conception à axe traversant, de recevoir divers types d'arbres. Elles s'appuient notamment sur l'utilisation d'un aimant permanent de type anneau ou tuile dont la rotation est détectée par un ou plusieurs éléments magnétosensibles situés sur la périphérie de l'aimant dans un plan perpendiculaire à l'axe de rotation.

Une des utilisations que l'on peut imaginer pour ces solutions est que le capteur reçoive en guise d'arbre un « indicateur » (par exemple : bouton de commande de chauffage ou climatisation sur un tableau de bord, panneau de commande sur une machine industrielle etc...) permettant de communiquer de manière visuelle une information à un utilisateur concernant la position angulaire de cet indicateur, elle-même directement liée à l'angle de rotation de l'axe du capteur. Plus particulièrement, il peut être intéressant d'illuminer ce bouton.

On connait dans l'état de la technique la demande de brevet EP2327964 qui présente un dispositif de mesure utilisant un ensemble de détection de position tel que décrit dans la demande EP1949036, l'axe accueillant un pointeur destiné à communiquer une indication visuelle de par sa position en regard d'un cadran gradué. Des moyens d'illumination de type diode électroluminescente (diode électroluminescente) placés sur la périphérie du capteur sont disposés de manière à éclairer le cadran. Des effets visuels suivant que l'on alimente ou pas les diodes, ou que l'on utilise des diodes de différentes couleurs, sont également suggérés.

Cependant, cette solution s'avère extrêmement encombrante, car elle met en oeuvre un certain nombre de composants (diode électroluminescente) séparés pour obtenir un éclairage correct et en fonction des effets visuels voulus. De plus, les sources de lumière étant sensiblement espacées, ceci peut avoir des effets sur la qualité et l'homogénéité des différentes couleurs mises en oeuvre.

Enfin, l'usage d'un cadran en périphérie du capteur ajoute à la complexité et ne permet pas une transmission d'information visuelle directement via la partie mobile.

Dans le domaine de l'instrumentation automobile (pilotage des indicateurs de tableau de bord par un moteur pas-à-pas) il est maintenant commun d'illuminer l'indicateur (pointeur) via une diode électroluminescente placée sous le moteur juste en dessous de l'axe translucide du pointeur, en utilisant des solutions de moteurs pas-à-pas à axe creux comme par exemple décrit dans la demande de brevet EP 2035783.

L'avantage de ces concepts est de permettre une illumination optimale de l'axe et de minimiser le nombre de diode électroluminescentes nécessaires (une seule suffit à priori), par opposition à des solutions où les diode électroluminescente sont montées hors de l'axe de révolution du pointeur.

Cependant, l'utilisation d'une motorisation n'est pas nécessaire dans un certain nombre de configurations où la position de l'indicateur est directement définie par un effet physique ou par l'utilisateur. De plus, les solutions de motorisation telles que décrites ci-dessus ne comportent pas de solution de détection de position intégrées et dédiées à des effets lumineux variables. De par les faibles diamètres des axes de ces moteurs (typiquement quelques millimètres), elles ne permettent quoiqu'il en soit pas d'intégrer plusieurs composants en regard de l'axe translucide.

On connaît également le brevet DE2337409 qui décrit un bouton avec un dispositif de commutation actionné magnétiquement, avec l'un des moyens d'actionnement par une touche de commutation mobile à aimant permanent d'un élément de commande qui sert qu'il comprend en outre une lampe témoin, caractérisé en ce que le moyen d'actionnement est formée au moins partiellement à partir du corps de la lampe témoin. Des ressorts de contact sont prévus pour la mise en contact électrique du voyant.

La demande de brevet US2007/117870 décrit un commutateur à commande à distance électrique avec accès omnidirectionnelle permettant de contrôler à distance des dispositifs connectés électriquement. Le commutateur de commande à distance électrique permet aux appareils électriques à contrôler avec dextérité physique minimale, ce qui facilite les efforts physiques nécessaires aux fonctions classiques des dispositifs de commutation électrique.

La demande de brevet DE202006012204 décrit une lampe présentant une partie de poignée d'éclairage qui entoure le couvercle de la lampe et agit sur l'interrupteur et / ou un variateur. Cette partie de poignée peut être déplacé et / ou pivoté par rapport au couvercle de la lampe et peut être éclairé par une lumière de plus basse tension comme une ou plusieurs LED qui s'allument de façon indépendante de la position de commutation de l'interrupteur de commande de la lumière. La section de poignée peut avoir une surface d'extrémité transparente.

La demande de brevet US2004/0227613 décrit un potentiomètre de type rotatif résistance variable comprenant un éclairage. Un boîtier comprend une plaque à fond ronde, une paroi extérieure cylindrique faisant saillie dans une première direction, et un cylindre. Ce boîtier loge un substrat isolant annulaire ayant une résistance avec un film conducteur sur sa surface tournée dans la première direction.

Un bouton d'actionnement comprend un élément d'actionnement cylindrique rotatif monté sur le cylindre et une bride ayant une résistance et diode curseur coulissant sur une face dans une seconde direction étant opposée à la première direction.

Le document DE20218508 décrit un bouton de verrouillage de porte présente un corps de bouton d'un matériau transparent qui est éclairé par au moins une source de lumière, par exemple une LED de couleur, à son extrémité inférieure, décalé d'un côté de son axe central.

Le matériau transparent du corps de bouton peut incorporer des bulles ou des particules de dispersion de lumière et / ou de réflexion, avec la source de lumière et

### EXPOSE DE L'INVENTION

La présente invention vise donc en premier lieu à proposer une solution permettant de communiquer à un utilisateur une information de position visuelle relative ou absolue, de manière simple et compacte, en utilisant au moins une source lumineuse ponctuelle. Le module présente une interface de type axe creux permettant de recevoir une interface mécanique translucide externe (indicateur, bouton...). Le capteur de position fournit un signal fonction de la position qui permet accessoirement de commander l'état lumineux de la source lumineuse.

Plus particulièrement, l'invention concerne module indicateur de position comprenant un capteur de position constitué d'un élément mobile, apte à être entrainé directement par un opérateur ou par un élément d'entrainement mécanique ou électromécanique, et d'un ensemble de détection délivrant une information électrique dépendant de la position de l'ensemble mobile, sans contact avec l'ensemble mobile, ainsi qu'au moins un élément d'illumination comportant au moins une source lumineuse, caractérisé en ce que l'ensemble mobile comporte une zone apte à laisser passer le faisceau lumineux issu dudit élément d'illumination et en ce que l'élément d'illumination est situé en regard de ladite zone.

L'invention évite ainsi les difficultés rencontrées avec des solutions où la LED est mobile et alimentée avec des éléments mobiles, qui réduisent la fiabilité et oblige le recours à un sans contact électrique.

L'invention évite aussi les inconvénients du document antérieur DE2337409 où l'aimant est solidaire de la diode, ce qui n'est pas aisé mécaniquement et de plus produit un échauffement indésirable de l'aimant par la diode.

L'ensemble de détection est un capteur de position sans contact électrique ni mécanique, interagissant de manière électromagnétique avec un aimant.

La source de lumière est fixe et en regard (donc sans contact -aussi-) avec l'ensemble mobile. L'ensemble mobile (l'interface mécanique) est un élément externe par rapport à la LED.

De manière préférentielle, l'état d'alimentation électrique de l'élément d'illumination est dépendant du signal délivré par l'ensemble de détection.

La source lumineuse est avantageusement située sur le flanc.

L'invention repose donc en premier lieu sur l'emploi d'un capteur de position constitué d'un élément mobile et d'un élément de détection fixe qui sera apte à délivrer un signal (typiquement une tension) dépendant de la position de l'élément mobile. Cet élément mobile comportera une ouverture qui permettra de laisser passer un faisceau lumineux issu d'un moyen d'illumination.

Selon une première variante, le capteur sera de type rotatif, absolu ou incrémental, l'ouverture correspondant alors typiquement à la configuration d'un capteur à axe traversant ou axe creux. Idéalement, le moyen d'illumination pourra être placé sur l'axe de rotation du capteur, en regard de la dite ouverture. On peut également tout à fait envisager d'utiliser un capteur multi-tours absolu ou incrémental.

Selon une seconde variante, le capteur sera de type linéaire. Dans le cas d'une variante linéaire axisymétrique, le moyen d'illumination sera idéalement localisé sur l'axe de symétrie de la structure.

La zone apte à laisser passer le faisceau lumineux est préférentiellement une ouverture avec un bouton placé dans ladite ouverture. Le bouton est avantageusement solidaire de l'ensemble mobile.

Dans un mode de réalisation particulier, ce bouton est partiellement réalisé en un matériau translucide apte à guider la lumière émise par l'élément d'illumination. Selon une variante, il sera solidaire de l'ensemble mobile. On peut ainsi imaginer pour ce bouton des formes très diverses, se rapprochant par exemple d'un pointeur, le dit pointeur pouvant par la suite rapporter une information visuelle sur un cadran en parallèle de l'information visuelle produite par l'illumination.

Dans un mode de réalisation particulier l'ensemble de détection délivre un signal absolu proportionnel à la position de l'élément mobile.

Dans un autre mode de réalisation particulier l'ensemble de détection délivre un signal sous forme de paliers discrets dépendant de la position de l'élément mobile.

Dans un mode de réalisation particulier, la couleur ou l'intensité de la lumière émise par l'élément d'illumination est dépendante du signal délivré par l'ensemble de détection.

Dans un mode de réalisation particulier, la couleur ou l'intensité de la lumière émise par l'élément d'illumination varie de façon continue et proportionnelle au signal délivré par l'ensemble de détection.

Dans un autre mode de réalisation particulier, la couleur ou l'intensité émise par l'élément d'illumination varie de façon discrète en fonction du signal délivré par l'ensemble de détection.

Dans un mode de réalisation alternatif, l'élément d'illumination comporte plusieurs sources lumineuses situées sensiblement en un même point. Lesdites sources lumineuses peuvent alors émettre une couleur différente les unes des autres.

Dans un mode de réalisation préféré, l'élément d'illumination est une diode électroluminescente (diode électroluminescente), éventuellement une diode électroluminescente (diode électroluminescente) multicolore, l'ensemble de détection comporte au moins une sonde magnétosensible et l'élément mobile comporte au moins un élément générateur de flux magnétique.

Le capteur de position peut mesurer la position linéaire de l'ensemble mobile dans le cas d'un déplacement linéaire ou mesurer la position rotative dans le cas d'un capteur rotatif ou mesurer la combinaison d'un déplacement linéaire et rotatif dans le cas d'un capteur bi-directionnel.

Préférentiellement, le ou les éléments d'illumination sont situés sur l'axe de rotation ou de symétrie de l'ensemble mobile.

Dans la plupart des configurations, l'ensemble de détection et l'élément d'illumination sont disposés dans le même plan et sur un même circuit imprimé et préférentiellement disposés dans un même boitier.

Le module indicateur selon l'invention pourra aussi être judicieusement associé à un ensemble d'aimants constituant un module de couplage magnétique destiné à moduler le couple ressenti par l'utilisateur de l'élément mobile du module indicateur dans le but de lui fournir la sensation de positions préférentielles au cours de la rotation ou du déplacement linéaire du mobile. Dans une réalisation plus astucieuse, l'aimant qui peut être utilisé pour réaliser la détection au sein du module indicateur et l'aimant mobile du couplage magnétique ne font qu'un.

Le module indicateur selon l'invention pourra aussi être judicieusement associé à un ensemble d'entrainement électromécanique de manière à constituer un ensemble de positionnement, la détection de position se faisant directement soit sur l'axe de l'élément d'entrainement (typiquement moteur ou actionneur électrique), soit sur l'axe de sortie du réducteur si on a affaire à un élément d'entrainement couplé à un réducteur mécanique. L'élément d'illumination pourra donc être situé soit sur l'axe de rotation de l'élément d'entrainement (ou en regard de l'axe de déplacement dans le cas d'un entrainement linéaire), soit sur ou en regard de l'axe de sortie du moto-réducteur, le cas échéant. Selon une variante astucieuse, la détection de position pourra se faire en utilisant l'aimant de l'élément d'entrainement.

Dans le cas où l'élément d'entrainement est électrique l'ensemble mobile du module indicateur de position est solidaire de la partie mobile de l'élément d'entrainement électrique que cet entrainement soit un moto-réducteur (par exemple à train d'engrenages) ou un système à entrainement direct rotatif ou linéaire.

Pour ce qui concerne le capteur de position, une des possibilités les plus intéressantes consiste à utiliser une solution magnétique, l'élément mobile étant par exemple constitué d'un aimant permanent, et l'ensemble de mesure comportant au moins une sonde magnétosensible (de type sonde de Hall ou magnétorésistive) apte à détecter la position de l'élément mobile via une mesure de la variation de l'amplitude ou de la rotation du champ magnétique induite par le déplacement de la partie mobile.

Selon une première variante, cette sonde fournira une information proportionnelle à la position de la partie mobile. Alternativement, elle pourra fournir un signal sous forme de palier (typiquement une sortie digitale, avec un état haut si l'élément mobile se trouve sur une plage de position donnée, et un état bas s'il se trouve sur la plage complémentaire au regard de la course totale).

Un des grands intérêts de l'invention ici présentée est de pouvoir fournir selon une configuration simple une information lumineuse variant en fonction de la position de l'élément mobile. Ainsi, on peut envisager que l'état du moyen d'illumination (par exemple éteint / allumé), ou encore la couleur ou l'intensité émise par le dit moyen, varie en fonction de l'information de position fournie par l'ensemble de détection, soit de manière continue, soit discrète.

Dans le cas d'un capteur multi-tours on peut ainsi imaginer avoir une information renseignant sur le tour dans lequel on se trouve, éventuellement de manière conjointe à une information sur la position à l'intérieur de ce tour.

Une solution particulièrement élégante consiste à utiliser comme moyen d'illumination une diode électroluminescente multicolore. En effet, ce type de composant présente la capacité de pouvoir émettre simultanément dans un même boitier plusieurs couleurs (typiquement trois : Rouge, Vert, Bleu, comme par exemple selon la référence ASMT-QTB2 de Avago) avec la possibilité de moduler l'intensité des couleurs émises selon la configuration de son alimentation. Contrairement à la solution décrite dans la demande de brevet EP 2035783, on peut ainsi avec un moyen d'illumination unique obtenir des effets de variation de couleur émanant de sources de lumière colocalisées. En effet, un tel composant a la particularité d'intégrer des sources de lumière séparées chacune par une distance inférieure au millimètre.

On peut ainsi à l'aide d'un composant unique obtenir des variations de couleur soit continues soit discrètes en fonction de la position de l'élément et du signal de sortie de l'élément de détection, avec une qualité et une homogénéité d'illumination indépendante de la couleur émise, y compris en face de zones de passage de lumière de très faibles dimensions.

Il est aussi à noter que cette invention s'applique particulièrement bien aux capteurs angulaires miniatures, puisqu'elle permet avec un petit aimant de type bague, une sonde magnétosensible unique (par exemple de type MLX90316 ou HAL3625) et une diode électroluminescente placée sur l'axe de rotation, de réaliser dans un boitier un module indicateur à axe creux dans lequel on peut rapporter différents types de boutons en fonction de l'application.

L'élément mobile peut être entrainé par un opérateur ou mis en mouvement par un système mécanique, éventuellement issu d'un système de conversion d'une grandeur mesurée (par exemple capteur de niveau de fluide avec un flotteur lié à un levier dont l'axe de rotation est solidaire de l'élément mobile).

L'invention sera mieux comprise par la description des figures ci-après.

### BREVE DESCRIPTION DES FIGURES

La figure 1 présente une vue schématique du module indicateur de position dans un premier mode de réalisation rotatif.
Les figures 2a et 2b présentent respectivement une vue en coupe et une vue en perspective détaillées du module indicateur de position dans le premier mode de réalisation rotatif.
Les figures 3a et 3b représentent respectivement une vue en coupe et une vue en perspective détaillées du module indicateur de position dans un second mode de réalisation rotatif.
La figure 4 présente le module indicateur de position dans un premier mode de réalisation linéaire.
La figure 5 présente le module indicateur de position dans un second mode de réalisation linéaire.
La figure 6 présente, suivant un premier mode particulier, des visualisations graphiques des signaux du module indicateur de position.
La figure 7 présente, suivant un second mode particulier, des visualisations graphiques des signaux du module indicateur de position.
La figure 8 présente le module indicateur de position associé à un élément d'entrainement direct.
La figure 9 présente le module indicateur de position associé à un élément d'entrainement utilisant un train d'engrenage réducteur.

### DESCRIPTION DETAILLEE DES MODES DE REALISATION

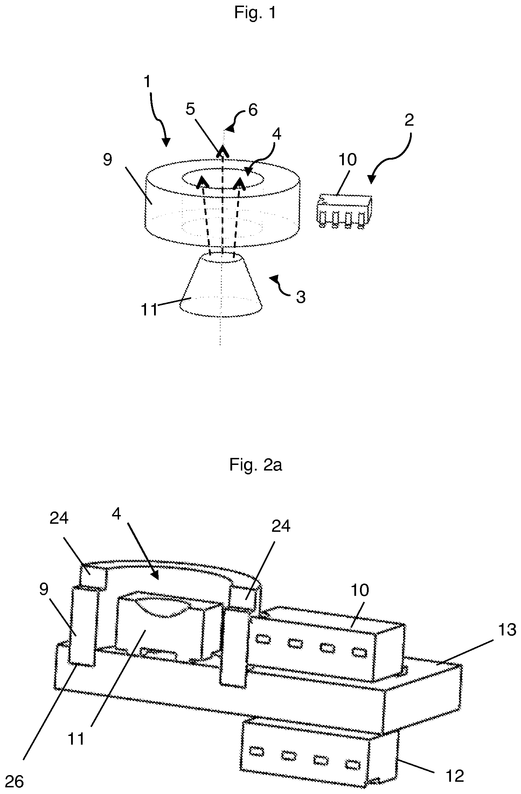

La figure 1 représente de manière schématique le module indicateur de position selon sa configuration la plus élémentaire appliquée à un capteur angulaire de course pouvant aller jusqu'à 360°. L'élément mobile (1) est constitué d'un aimant permanent (9) de type bague, qui sera, par exemple, aimanté de manière diamétrale et associé à une sonde magnétosensible (10) capable de mesurer la rotation du champ magnétique induite par la rotation de l'aimant (9), comme par exemple enseigné dans la demande de brevet EP1949036.

La forme tubulaire de l'aimant (9) libère donc en son centre une ouverture (4) qui définit une zone apte à laisser passer la lumière. La section intérieure de l'aimant (9) en forme de bague est du même ordre de grandeur que la section transversale de la source lumineuse (11), c'est-à-dire que l'aimant (5) présente un évidemment d'une section intérieure comprise entre 1,5 et 0,7 fois la section de la source lumineuse (11), et bien sur supérieure à la section de la source lumineuse lorsque celle-ci est logée à l'intérieure de l'aimant en forme de bague.

Un élément d'illumination (3) constitué par une diode électroluminescente (11) et avantageusement placé sous ou à l'intérieur de l'aimant, en regard de l'ouverture (4) et sur l'axe de rotation (6) de l'aimant permanent (9), génère donc un faisceau lumineux (5).

Dans l'ensemble des illustrations qui suivent l'élément d'illumination (3) est représenté sous la forme d'une diode électroluminescente (11) qui constitue un moyen non limitatif mais privilégié.

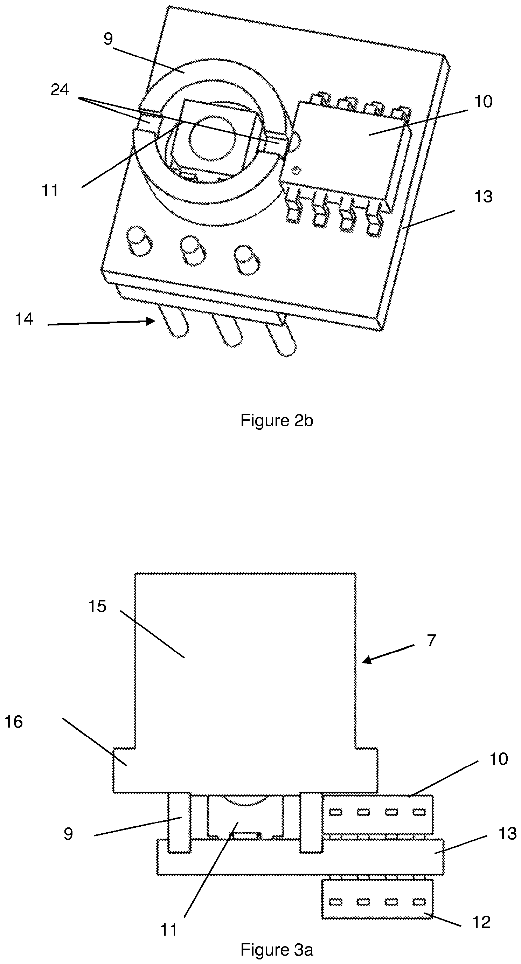

Les figures 2a et 2b représentent une configuration plus complète du module indicateur de position, respectivement en vue de coupe et en vue pleine. Avantageusement, l'élément mobile (1) est constitué d'un aimant permanent (9) de type bague présentant une ouverture (4) apte à recevoir différents boutons.

L'aimant présente avantageusement deux gorges (24) permettant l'indexation d'un bouton (non représenté) actionné par l'utilisateur ou un élément mécanique extérieur.

L'ensemble des composants diode électroluminescente (11), sonde (10) et éventuellement microcontrôleur (12) sont connectés sur un même circuit imprimé (13).

Un connecteur (14) électrique pour la connexion et sortie du signal est aussi installé sur le circuit imprimé (13), ici représenté sous la forme de trois pattes de connexion. Le microcontrôleur (12) permet ainsi de recevoir et traiter l'information venant de la sonde (10) afin de piloter l'éclairage de la diode électroluminescente (11).

Le circuit imprimé (13) sert à la fois à la connexion électrique des différents composants (diode électroluminescente (11), sonde (10), microcontrôleur (12) et connecteur (14) le cas échéant), et à l'assemblage mécanique de ces composants. Le circuit imprimé (13) assure le positionnement précis de l'aimant (9) par rapport à la sonde (10). La sonde (10) est disposée selon un axe radial de l'aimant (9), et de la diode électroluminescente (11) placé coaxialement par rapport à l'aimant (9).

Pour assurer le guidage en rotation de l'aimant, le circuit imprimé (13) présente une rainure annulaire (26) s'étendant dans une partie de l'épaisseur de la plaque isolante. Cette rainure (26) présente des dimensions voisines de la section de l'aimant (9) pour former un pallier lisse contraignant le positionnement mécanique de l'aimant en autorisant un degré de liberté en rotation axiale.

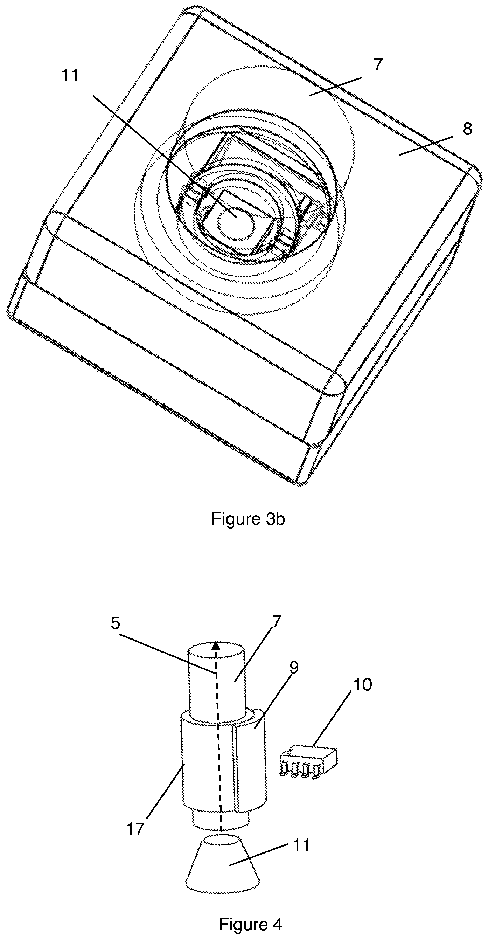

Les figures 3a et 3b représentent, respectivement en vue de profil et en vue pleine, une construction typiquement adaptée à un capteur rotatif miniature « universel » où tous les composants sont encapsulés dans un boitier unique (8) visible sur la seule figure 3b. La figure 3a représente également un bouton (7) constitué d'une partie centrale (15) en matériau translucide apte à guider la lumière et d'un habillage (16) réalisé par exemple en matériau plastique opaque. Les dimensions principales sont, typiquement mais de manière non limitative, pour l'aimant un diamètre intérieur de 7 mm, un diamètre extérieur de 5 mm et une hauteur de 3.5 mm, et pour la sonde de Hall de type MLX90316 un parallélépipède de 5 mm x 4 mm x 1.5 mm.

La figure 4 représente de manière schématique une variante linéaire. L'élément mobile (1) est constitué d'un aimant permanent (9) sous forme d'une tuile, monté sur un support (17) et associé à une sonde magnétosensible (10). A titre d'exemple, l'aimant (9) peut être aimanté de manière sinusoïdale de manière à conduire à une détection optimisée de sa position via la mesure de la variation de direction, selon les enseignements du brevet EP1989505. La diode électroluminescente (11) est placée dans l'espace situé derrière le support (17) et en regard d'un bouton translucide (7) fixe ou mobile laissant passer le faisceau lumineux (5).

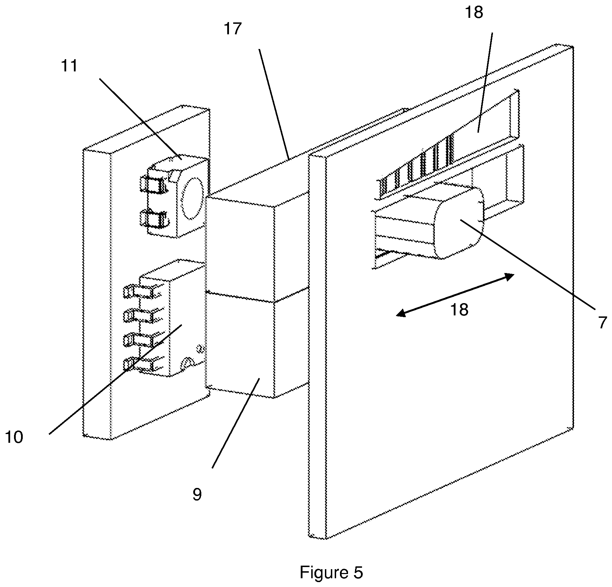

La figure 5 représente une vue 3D d'un exemple de réalisation et mise en scène d'une variante linéaire. L'élément mobile (1) est cette fois-ci constitué d'un aimant permanent (9) parallélépipédique fixé à un support (17) qui collecte et conduit la lumière émise par le diode électroluminescente (11) vers le bouton (7), l'élément mobile (1) se déplaçant latéralement suivant la double flèche pleine (18). Le déplacement du bouton (7) permet par exemple de régler un paramètre physique d'un dispositif (volume sonore, température d'un processus...) sur un afficheur (18) via la variation précise de signal électrique générée par la sonde (10) qui est placée au voisinage de l'aimant (9). La seconde information issue d'une variation de couleur ou d'intensité de la lumière traversant le bouton (7) est elle-même corrélée au signal électrique de la sonde (10). Pour l'exemple, on peut alors fournir à l'utilisateur une couleur bleue pour signifier une température froide et une couleur rouge pour une température chaude et une composition de couleur permettant de renseigner sur des températures intermédiaires.

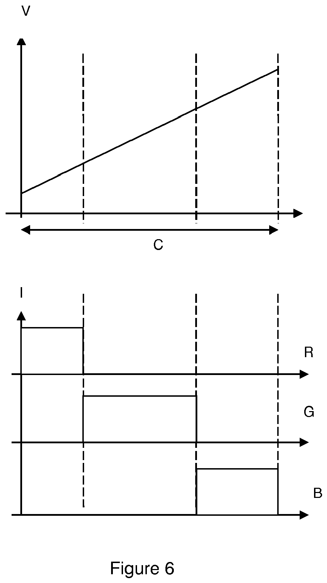

La figure 6 représente un mode de gestion élémentaire de l'élément d'illumination permettant de générer à partir d'une diode électroluminescente tricolore une illumination de couleur variant par paliers. Les deux graphiques sur cette figure 6 montrent, sur la partie supérieure, l'évolution de la tension de sortie du capteur (V) en fonction de la position sur la course de l'élément mobile (C) et, sur la partie inférieure, l'évolution de l'intensité de la couleur (I) en fonction de la position sur cette même course (C). On voit ainsi l'évolution possible, donnée ici à titre d'exemple, des couleurs (R pour rouge, G pour vert et B pour bleu) en fonction de la position sur la course (C).

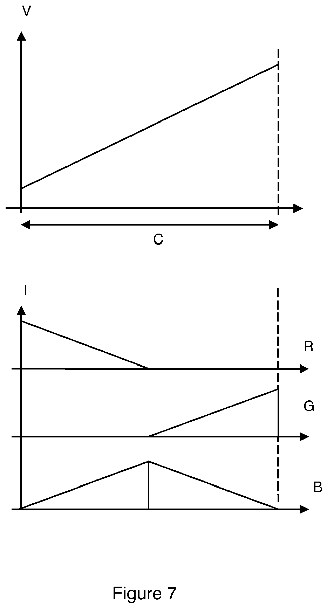

La figure 7 représente un mode de gestion élémentaire de l'élément d'illumination permettant de générer à partir d'une diode électroluminescente tricolore une illumination de couleur continûment variable en fonction de la position. Les deux graphiques sur cette figure 7 montrent, sur la partie supérieure, l'évolution de la tension de sortie du capteur (V) en fonction de la position sur la course de l'élément mobile (C) et, sur la partie inférieure, l'évolution de l'intensité de la couleur (I) en fonction de la position sur cette même course (C). On voit ainsi l'évolution possible, donnée ici à titre d'exemple, des couleurs (R pour rouge, G pour vert et B pour bleu) en fonction de la position sur la course (C).

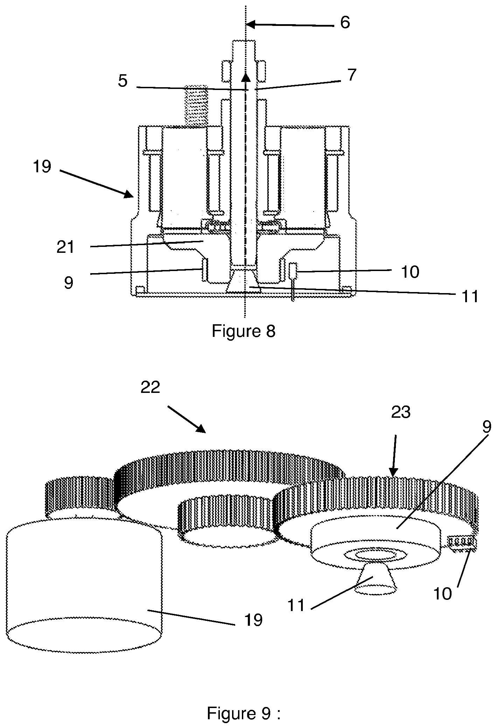

La figure 8 représente de manière schématique, et selon une vue en coupe, un ensemble de positionnement constitué d'un élément d'entrainement direct (19) tel, par exemple, l'actionneur électromagnétique rotatif décrit dans le brevet FR2670629, associé à un module indicateur de positionnement.

L'élément d'entrainement (19) comporte un rotor constitué d'une culasse (21) en matériau ferromagnétique et d'un aimant permanent (9) monté sur l'extérieur de la culasse (21). L'aimant (9) est utilisé pour la détection de position par la sonde (10).

La culasse (21) est solidaire d'un bouton (7), ici sous la forme d'un axe de sortie, au moins partiellement translucide apte à laisser passer le faisceau lumineux (5) émis par la diode électroluminescente (11) placée sur l'axe de rotation (6) de la culasse (21).

De manière alternative (non montrée ici), on pourrait aussi envisager, dans le cas d'un élément d'entrainement (19) utilisant un aimant moteur, d'utiliser cet aimant pour produire l'effort mécanique et aussi pour fournir l'information de position détectée par la sonde (10) afin de ne présenter qu'un seul aimant dans le système global crée.

La figure 9 représente un ensemble de positionnement constitué d'un élément d'entrainement (19) associé à un train d'engrenage (22) et un module indicateur de positionnement tel que décrit par l'invention.

L'élément d'entrainement (19) est ici un moteur électrique, typiquement mais de manière non limitative de type pas-à-pas sans balais, qui entraine un train d'engrenage (22) réalisant une réduction du mouvement et comportant plusieurs étages. L'aimant permanent (9) est solidaire et concentrique de la roue de sortie (23), qui comporte une ouverture (4) en regard de laquelle est placée la diode électroluminescente (11), ladite ouverture (4) pouvant ensuite accueillir un axe (non montré) comportant une partie translucide. Une sonde magnétosensible (10) est à proximité de l'aimant (9) afin de détecter la position de la roue de sortie (23) et de permettre la modification du signal lumineux de la diode électroluminescente (11) dans l'axe (non montré).

Selon une variante de réalisation, le module comporte en outre un détecteur d'enfoncement de l'aimant (9) par rapport à sa position de repos. Ce détecteur peut être constitué par un contact électrique ou tout autre moyen équivalent. Il permet d'enregistrer une position angulaire du bouton par un appui sur ce dernier, afin par exemple de mémoriser le signal correspondant à la position au moment de cet appui. L'action détectée peut conduire à une modification de la loi de commande de l'éclairage, par exemple le passage d'une loi de commande où la couleur et/ou l'intensité varie en fonction de la position angulaire, vers une loi de commande où l'éclairage devient constant, jusqu'à un nouvel appui par exemple.

## Revendications

1. Module indicateur de position comprenant un capteur de position constitué d'un élément mobile (1), apte à être entrainé directement par un opérateur ou par un élément d'entrainement (19) mécanique ou électromécanique, et d'un ensemble de détection délivrant une information électrique dépendant de la position de l'ensemble mobile (1), sans contact avec l'ensemble mobile, ainsi qu'au moins un élément d'illumination (3) comportant au moins une source lumineuse, **caractérisé en ce que** l'ensemble mobile (1) comporte une zone apte à laisser passer le faisceau lumineux (5) issu dudit élément d'illumination (3) et **en ce que** l'élément d'illumination (3) est situé en regard de ladite zone, **en ce que** l'élément mobile comprend un aimant, et l'ensemble de détection comprend une sonde magnétosensible capable de mesurer la variation du champ magnétique induite par le mouvement de l'aimant, **en ce que** l'état d'alimentation électrique de l'élément d'illumination est dépendant du signal délivré par l'ensemble de détection.

2. Module indicateur de position selon la revendication précédente **caractérisé en ce que** l'état d'alimentation électrique de l'élément d'illumination (3) est dépendant du signal délivré par l'ensemble de détection.

3. Module indicateur de position selon l'une des revendications précédentes **caractérisé en ce que** l'ensemble de détection délivre un signal absolu proportionnel à la position de l'élément mobile (1).

4. Module indicateur de position selon les revendications précédentes **caractérisé en ce que** l'ensemble de détection délivre un signal sous forme de paliers discrets dépendant de la position de l'élément mobile (1).

5. Module indicateur de position selon l'une au moins des revendications précédentes **caractérisé en ce que** la couleur ou l'intensité de la lumière émise par l'élément d'illumination (3) est dépendante du signal délivré par l'ensemble de détection.

6. Module indicateur de position selon l'une au moins des revendications précédentes **caractérisé en ce que** la couleur ou l'intensité de la lumière émise par l'élément d'illumination (3) varie de façon continue et proportionnelle au signal délivré par l'ensemble de détection.

7. Module indicateur de position selon l'une au moins des revendications précédentes **caractérisé en ce que** la couleur ou l'intensité émise par l'élément d'illumination (3) varie de façon discrète en fonction du signal délivré par l'ensemble de détection.

8. Module indicateur de position selon l'une au moins des revendications précédentes **caractérisé en ce que** l'élément d'illumination (3) comporte plusieurs sources lumineuses situées sensiblement en un même point.

9. Module indicateur de position selon la revendication précédente **caractérisé en ce que** au moins une des dites sources lumineuses émette une couleur différente des autres.

10. Module indicateur de position selon l'une au moins des revendications précédentes **caractérisé en ce que** l'élément d'illumination (3) est une diode électroluminescente (diode électroluminescente).

11. Module indicateur de position selon la revendication précédente **caractérisé en ce que** l'élément d'illumination (3) est une diode électroluminescente (diode électroluminescente) multicolore.

12. Module indicateur de position selon l'une des revendications précédentes **caractérisé en ce que** l'ensemble de détection comporte au moins une sonde magnétosensible (10).

13. Module indicateur de position selon l'une des revendications précédentes **caractérisé en ce que** l'élément mobile (1) comporte au moins un élément générateur de flux magnétique.

14. Module indicateur de position selon l'une des revendications précédentes **caractérisé en ce que** la zone apte à laisser passer le faisceau lumineux est une ouverture (4) et qu'un bouton (7) est placé dans ladite ouverture (4).

15. Module indicateur de position selon la revendication précédente **caractérisé en ce que** le bouton (7) est solidaire de l'ensemble mobile (1).

16. Module indicateur de position selon les revendications 14 ou 15 **caractérisé en ce que** le bouton (7) est au moins partiellement réalisé en un matériau translucide apte à guider la lumière émise par l'élément d'illumination (3).

17. Module indicateur de position selon l'une des revendications précédentes **caractérisé en ce que** le capteur de position mesure la position linéaire de l'ensemble mobile (1).

18. Module indicateur de position selon l'une des revendications précédentes, **caractérisé en ce que** le capteur de position mesure la rotation de l'ensemble mobile (1).

19. Module indicateur de position selon les revendications 17 et 18 **caractérisé en ce que** le capteur mesure un mouvement combiné.

20. Module indicateur de position selon la revendication précédente, **caractérisé en ce qu'**au moins un des éléments d'illumination est situé sur l'axe de rotation (6) de l'élément mobile (1).

21. Module indicateur de position selon l'une des revendications précédentes **caractérisé en ce que** l'ensemble de détection et l'élément d'illumination (3) sont disposés dans le même plan.

22. Module indicateur de position selon l'une des revendications précédentes **caractérisé en ce que** l'ensemble de détection et l'élément d'illumination (3) sont disposés sur un même circuit imprimé (13).

23. Module indicateur de position selon l'une des revendications précédentes **caractérisé en ce que** l'élément mobile (1), l'ensemble de détection et l'élément d'illumination (3) sont disposés dans un même boitier (8).

24. Module indicateur de position selon l'une des revendications précédentes **caractérisé en ce qu'**il comporte en outre un détecteur d'enfoncement de l'aimant (9) par rapport à sa position de repos

25. Ensemble de positionnement intégrant un module indicateur de position selon l'une des revendications précédentes ainsi qu'un ensemble d'entrainement constitué d'un élément d'entrainement (19) électrique, **caractérisé en ce que** l'ensemble mobile (1) du module indicateur de position est solidaire de la partie mobile de l'élément d'entrainement (19) électrique.

26. Ensemble de positionnement selon la revendication précédente **caractérisé en ce que** l'ensemble d'entrainement est un moto-réducteur.

27. Ensemble de positionnement selon la revendication 25 **caractérisé en ce que** l'ensemble d'entrainement est un système à entrainement direct rotatif ou linéaire.

## Patentansprüche

1. Positionsanzeigemodul mit Positionssensor bestehend aus einem beweglichen Element (1), das direkt von einem Bediener oder einem mechanischen oder elektromechanischen Antriebselement (19) angetrieben werden kann, einer Detektionseinheit, die eine von der Position der beweglichen Einheit (1) abhängende elektrische Information ausgibt, ohne mit der beweglichen Einheit in Kontakt zu stehen, sowie mindestens einem Beleuchtungselement (3) mit mindestens einer Lichtquelle, **dadurch gekennzeichnet, dass** die bewegliche Einheit (1) einen Bereich enthält, der den Lichtstrahl (5) des besagten Beleuchtungselements (3) durchlässt und sich das Beleuchtungselement (3) gegenüber dieses Bereichs befindet, und dadurch, dass das bewegliche Element einen Magneten aufweist und die Detektionseinheit eine magnetempfindliche Sonde enthält, welche die durch die Bewegung des Magneten induzierte Magnetfeldänderung messen kann, und dadurch, dass der Stromversorgungsstatus des Beleuchtungselements von dem Signal abhängt, das von der Detektionseinheit geliefert wird.

2. Positionsanzeigemodul nach dem vorhergehenden Anspruch, **dadurch gekennzeichnet, dass** der Stromversorgungsstatus des Beleuchtungselements (3) von dem Signal abhängt, das von der Detektionseinheit geliefert wird.

3. Positionsanzeigemodul nach einem der vorhergehenden Ansprüche, **dadurch gekennzeichnet, dass** die Detektionseinheit ein absolutes Signal liefert, das sich proportional zur Position des beweglichen Elements (1) verhält.

4. Positionsanzeigemodul nach den vorhergehenden Ansprüchen, **dadurch gekennzeichnet, dass** die Detektionseinheit ein Signal in Form von diskreten Stufen liefert, das von der Position des beweglichen Elements (1) abhängt.

5. Positionsanzeigemodul nach mindestens einem der vorhergehenden Ansprüche, **dadurch gekennzeichnet, dass** die Farbe oder Stärke des vom Beleuchtungselement (3) abgestrahlten Lichts von dem von der Detektionseinheit gelieferten Signal abhängt.

6. Positionsanzeigemodul nach mindestens einem der vorhergehenden Ansprüche, **dadurch gekennzeichnet, dass** sich die Farbe oder Stärke des vom Beleuchtungselement (3) abgestrahlten Lichts kontinuierlich proportional zu dem von der Detektionseinheit gelieferten Signal ändert.

7. Positionsanzeigemodul nach mindestens einem der vorhergehenden Ansprüche, **dadurch gekennzeichnet, dass** sich die vom Beleuchtungselement (3) abgestrahlte Farbe oder Stärke in Abhängigkeit von dem von der Detektionseinheit gelieferten Signal diskret verändert.

8. Positionsanzeigemodul nach mindestens einem der vorhergehenden Ansprüche, **dadurch gekennzeichnet, dass** das Beleuchtungselement (3) mehrere Lichtquellen enthält, die sich im Wesentlichen an einer Stelle befinden.

9. Positionsanzeigemodul nach dem vorhergehenden Anspruch, **dadurch gekennzeichnet, dass** mindestens eine der besagten Lichtquellen eine Farbe abstrahlt, die von den anderen abweicht.

10. Positionsanzeigemodul nach mindestens einem der vorhergehenden Ansprüche, **dadurch gekennzeichnet, dass** das Beleuchtungselement (3) eine Leuchtdiode (Leuchtdiode) ist.

11. Positionsanzeigemodul nach dem vorhergehenden Anspruch, **dadurch gekennzeichnet, dass** das Beleuchtungselement (3) eine mehrfarbige Leuchtdiode (Leuchtdiode) ist.

12. Positionsanzeigemodul nach einem der vorhergehenden Ansprüche, **dadurch gekennzeichnet, dass** die Detektionseinheit mindestens eine magnetempfindliche Sonde (10) enthält.

13. Positionsanzeigemodul nach einem der vorhergehenden Ansprüche, **dadurch gekennzeichnet, dass** das bewegliche Element (1) mindestens ein Element enthält, welches einen magnetischen Fluss generiert.

14. Positionsanzeigemodul nach einem der vorhergehenden Ansprüche, **dadurch gekennzeichnet, dass** der Bereich, der den Lichtstrahl durchlässt, eine Öffnung (4) ist, und dadurch, dass sich ein Knopf (7) in besagter Öffnung (4) befindet.

15. Positionsanzeigemodul nach dem vorhergehenden Anspruch, **dadurch gekennzeichnet, dass** der Knopf (7) fest mit der beweglichen Einheit (1) verbunden ist.

16. Positionsanzeigemodul nach den Ansprüchen 14 oder 15, **dadurch gekennzeichnet, dass** der Knopf (7) zumindest teilweise aus einem durchscheinenden Material besteht, das in der Lage ist, das von dem Beleuchtungselement (3) abgestrahlte Licht zu leiten.

17. Positionsanzeigemodul nach einem der vorhergehenden Ansprüche, **dadurch gekennzeichnet, dass** der Positionssensor die lineare Position der beweglichen Einheit (1) misst.

18. Positionsanzeigemodul nach einem der vorhergehenden Ansprüche, **dadurch gekennzeichnet, dass** der Positionssensor die Drehung der beweglichen Einheit (1) misst.

19. Positionsanzeigemodul nach den Ansprüchen 17 und 18, **dadurch gekennzeichnet, dass** der Sensor eine kombinierte Bewegung misst.

20. Positionsanzeigemodul nach dem vorhergehenden Anspruch, **dadurch gekennzeichnet, dass** sich mindestens eines der Beleuchtungselemente auf der Drehachse (6) des beweglichen Elements (1) befindet.

21. Positionsanzeigemodul nach einem der vorhergehenden Ansprüche, **dadurch gekennzeichnet, dass** die Detektionseinheit und das bewegliche Element (3) auf der gleichen Ebene angeordnet sind.

22. Positionsanzeigemodul nach einem der vorhergehenden Ansprüche, **dadurch gekennzeichnet, dass** die Detektionseinheit und das Beleuchtungselement (3) auf ein und derselben Leiterplatte (13) angeordnet sind.

23. Positionsanzeigemodul nach einem der vorhergehenden Ansprüche, **dadurch gekennzeichnet, dass** das bewegliche Element (1), die Detektionseinheit und das Beleuchtungselement (3) in ein und demselben Gehäuse (8) angeordnet sind.

24. Positionsanzeigemodul nach einem der vorhergehenden Ansprüche, **dadurch gekennzeichnet, dass** es des Weiteren einen Detektor zur Erkennung der eingedrückten Stellung des Magneten (9) in Bezug auf seine Ruhestellung enthält.

25. Positionierungseinheit mit einem Positionsanzeigemodul gemäß einem der vorhergehenden Ansprüche und einer Antriebseinheit, bestehend aus einem elektrischen Antriebselement (19), **dadurch gekennzeichnet, dass** die bewegliche Einheit (1) des Positionsanzeigemoduls mit dem beweglichen Teil des elektrischen Antriebselements (19) fest verbunden ist.

26. Positionierungseinheit nach dem vorhergehenden Anspruch, **dadurch gekennzeichnet, dass** die Antriebseinheit ein Getriebemotor ist.

27. Positionierungseinheit nach Anspruch 25, **dadurch gekennzeichnet, dass** die Antriebseinheit ein System mit rotierendem oder linearem Direktantrieb ist.

## Claims

1. A position-indicating module comprising a position sensor consisting of a mobile element (1), capable of being driven directly by an operator or by a mechanical or electromechanical drive element (19), and a detection unit outputting electrical information dependent on the position of the mobile assembly, without contact with the mobile assembly as well as at least one illumination element (3) including at least one light source, **characterised in that** the mobile assembly (1) includes an area capable of allowing the light beam (5) from said illumination element (3) to pass through, and **in that** the illumination element (3) is located opposite said area, **in that** the mobile element comprises a magnet, and the detection unit comprises a magnetosensitive probe capable of measuring the variation of the magnetic field induced by the movement of the magnet, and **in that** the electrical supply state of the illumination element is dependent on the signal output by the detection unit.

2. The position-indicating module according to the preceding claim, **characterised in that** the electrical supply state of the illumination element (3) is dependent on the signal output by the detection unit.

3. The position-indicating module according to one of the preceding claims, **characterised in that** the detection unit outputs an absolute signal proportional to the position of the mobile element (1).

4. The position-indicating module according to the preceding claims, **characterised in that** the detection unit outputs a signal in the form of discrete steps depending on the position of the mobile element (1) .

5. The position-indicating module according to at least one of the preceding claims, **characterised in that** the colour or the intensity of the light emitted by the illumination element (3) is dependent on the signal output by the detection unit.

6. The position-indicating module according to at least one of the preceding claims, **characterised in that** the colour or the intensity of the light emitted by the illumination element (3) varies continuously and proportionally to the signal output by the detection unit.

7. The position-indicating module according to at least one of the preceding claims, **characterised in that** the colour or the intensity emitted by the illumination element (3) varies discretely as a function of the signal output by the detection unit.

8. The position-indicating module according to at least one of the preceding claims, **characterised in that** the illumination element (3) includes a plurality of light sources located substantially at a single point.

9. The position-indicating module according to the preceding claim, **characterised in that** at least one of said light sources emits a different colour from the others.

10. The position-indicating module according to at least one of the preceding claims, **characterised in that** the illumination element (3) is a light-emitting diode (LED).

11. The position-indicating module according to the preceding claim, **characterised in that** the illumination element (3) is a multi-colour light-emitting diode (LED).

12. The position-indicating module according to one of the preceding claims, **characterised in that** the detection unit includes at least one magnetosensitive probe (10).

13. The position-indicating module according to one of the preceding claims, **characterised in that** the mobile element (1) includes at least one magnetic flux generating element.

14. The position-indicating module according to one of the preceding claims, **characterised in that** the area capable of allowing the light beam to pass through is an opening (4) and **in that** a button (7) is placed in said opening (4).

15. The position-indicating module according to the preceding claim, **characterised in that** the button (7) is rigidly connected to the mobile assembly (1).

16. The position-indicating module according to claims 14 or 15, **characterised in that** the button (7) is at least partially made of a translucent material capable of guiding the light emitted by the illumination element (3).

17. The position-indicating module according to one of the preceding claims, **characterised in that** the position sensor measures the linear position of the mobile assembly (1).

18. The position-indicating module according to one of the preceding claims, **characterised in that** the position sensor measures the rotation of the mobile assembly (1).

19. The position-indicating module according to claims 17 and 18, **characterised in that** the sensor measures a combined movement.

20. The position-indicating module according to the preceding claim, **characterised in that** at least one of the illumination elements is located on the axis of rotation (6) of the mobile element (1).

21. The position-indicating module according to one of the preceding claims, **characterised in that** the detection unit and the illumination element (3) are arranged in the same plane.

22. The position-indicating module according to one of the preceding claims, **characterised in that** the detection unit and the illumination element (3) are arranged on a single printed circuit (13).

23. The position-indicating module according to one of the preceding claims, **characterised in that** the mobile element (1), the detection unit and the illumination element (3) are arranged in a single housing (8).

24. The position-indicating module according to one of the preceding claims, **characterised in that** it also includes a detector of the sinking of the magnet (9) relative to the inoperative position thereof.

25. A positioning assembly incorporating a position-indicating module according to one of the preceding claims as well as a drive assembly consisting of an electric drive element (19), **characterised in that** the mobile assembly (1) of the position-indicating module is rigidly connected to the mobile portion of the electric drive element (19).

26. The positioning assembly according to the preceding claim, **characterised in that** the drive assembly is a geared motor.

27. The positioning assembly according to claim 25, **characterised in that** the drive assembly is a rotary or linear direct drive system.
